# EUROPÄISCHE PATENTANMELDUNG

(11) **EP 3 355 084 A1**
(43) Veröffentlichungstag der Anmeldung: **01.08.2018**
(21) Anmeldenummer: 17153757.4
(22) Anmeldetag: 30.01.2017
(51) Int. Cl.: G01W 1/14

(54) **NIEDERSCHLAGSMESSVORRICHTUNG**

(71) Anmelder: OTT Hydromet GmbH, 87437 Kempten (DE)
(72) Erfinder: Schmitz-Hübsch, Axel, 70736 Fellbach (DE); Hager, Helmut, 70736 Fellbach (DE); Knauß, Dieter, 70736 Fellbach (DE); Nemeth, Kurt, 87437 Kempten (DE)
(74) Vertreter: Grünecker Patent- und Rechtsanwälte PartG mbB

(57) **Zusammenfassung**

Die vorliegende Erfindung stellt eine Niederschlagsmessvorrichtung bereit, die mehrere, insbesondere mehr als zwei, Sammelbehälter, die um eine gemeinsame Drehachse und drehbar um dieselbe angeordnet sind, umfasst.

## Beschreibung

### Gebiet der Erfindung

Die Erfindung betrifft eine Niederschlagsmessvorrichtung zum Messen insbesondere atmosphärischen Niederschlags.

### Hintergrund der Erfindung der Technik

Der Niederschlag, beispielsweise in Form von Regen, Hagel oder Schnee, stellt eine der wichtigsten meteorologischen Messgrößen dar. Pro Zeiteinheit zu messende typische Niederschlagsmengen können von wenigen Millilitern bis zu mehreren Litern betragen. Eine möglichst hohe Messgenauigkeit für variable Niederschlagsmengen ist wünschenswert.

Im Stand der Technik sind mechanische Niederschlagsmessvorrichtungen bekannt, die Auffangbecher und Sensoren in Form von kippbaren Sammelbehältern sowie Wägesensoren umfassen (siehe beispielsweise DE 2 720 070 A1). Die Niederschlagsmenge wird über eine Gewichtsmessung des gesammelten Niederschlags ermittelt. Trotz neuerer Entwicklungen leiden herkömmliche Niederschlagsmessvorrichtungen unter mangelnder Messgenauigkeit, Verlässlichkeit, Aufnahmekapazität und/oder komplizierter störanfälliger Konstruktion. Diese Probleme sollen in der vorliegenden Erfindung behoben oder zumindest verringert werden. So ist es angesichts der Probleme im Stand der Technik eine Aufgabe der vorliegenden Erfindung, eine Niederschlagsmessvorrichtung bereitzustellen, welche die oben genannten Probleme vermeidet und insbesondere konstruktiv relativ einfach ist und verlässlich arbeitet.

### Beschreibung der Erfindung

Die oben genannte Aufgabe wird durch eine Niederschlagsmessvorrichtung gemäß Patentanspruch 1 gelöst.

Die Erfindung stellt eine Niederschlagsmessvorrichtung bereit, die mehrere, insbesondere mehr als zwei, beispielsweise drei oder vier, Sammelbehälter, die um eine gemeinsame (beispielsweise im Wesentlichen horizontale) Drehachse und (gemeinsam) drehbar um dieselbe angeordnet sind, umfasst. Die Sammelbehälter können die gleiche geometrische Form aufweisen. Die Niederschlagsmessvorrichtung kann weiterhin einen Sammeltrichter aufweisen, der dazu ausgebildet ist, Niederschlag in einen der mehreren Sammelbehälter zu leiten.

Anders als im Stand der Technik ist nicht ein Gefäß mit mehreren Kammern, die nur zum Teil durch Außenwände definiert sind (so teilen sich zwei Kammern eine Innenwand innerhalb eines und desselben Gefäßes), um eine Drehachse kippbar vorgesehen, sondern es sind erfindungsgemäß mehrere Sammelbehälter vorgesehen, von denen jeder (beispielsweise nur) durch Außenwände (eine der Außenwände kann als Boden des Sammelbehälters dienen) definiert ist, um eine gemeinsame (beispielsweise im Wesentlichen horizontale) Drehachse drehbar ist. Die Außenwände der Sammelbehälter sind also nicht innerhalb anderer Sammelbehälter angeordnet. Insbesondere können die mehreren Sammelbehälter der erfindungsgemäßen Niederschlagsmessvorrichtung entlang eines ganzen Vollkreises beweglich sein, d.h. um 360° um die Drehachse drehbar sein. So kann eine "Wasserrad"-Konfiguration bereitgestellt werden, in der jeder Sammelbehälter im Verlauf des Betriebs der Niederschlagsmessvorrichtung jede Position entlang des Vollkreises einnehmen kann. Große Niederschlagsmengen, wie sie in kurzer Zeit während Stürmen und Unwettern auftreten können, können mithilfe der erfindungsgemäßen Niederschlagsmessvorrichtung verlässlich und genau gemessen werden. Die Anzahl der Sammelbehälter kann dabei wunschgemäß gewählt werden. Eine Anpassung der Größe der Sammelbehälter an das Einsatzgebiet beziehungsweise den Einsatzort der Niederschlagsmessvorrichtung gemäß der vorliegenden Erfindung ist problemlos möglich.

Gemäß einer Weiterbildung grenzt jeder der mehreren Sammelbehälter an zumindest einer seiner Außenwände an eine Außenwand eines anderen der mehren Sammelbehälter an. Beispielsweise können sich je zwei der Sammelbehälter eine Außenwand teilen. So wird eine sehr kompakte robuste Konstruktion erreicht. Jeder der Sammelbehälter kann in seinem Boden lediglich mittig mit einem vorbestimmten Radius eine Vertiefung aufweisen. Der Schwerpunkt jedes Sammelbehälters bleibt dann bei Befüllung mit Niederschlag im Wesentlichen auf einer Achse durch die Mitte der Vertiefung positioniert, wodurch insgesamt die Messgenauigkeit erhöht werden kann.

Gemäß einer Weiterbildung umfasst die Niederschlagsmessvorrichtung einer der oben beschriebenen Beispiele eine Einrichtung, die dazu ausgebildet ist, die Sammelbehälter um die gemeinsame Drehachse zu drehen. Diese Einrichtung kann einen Motor, beispielsweise einen Elektromotor, und/oder eine lösbare Arretierung zum Arretieren und Freigeben mindestens eines der mehreren Sammelbehälter umfassen. Die lösbare Arretierung kann eine mechanische lösbare Arretierung sein. Bei Erreichen einer vorbestimmten Menge eines in einem der Sammelbehälter gesammelten Niederschlags kann der Sammelbehälter (und können somit auch alle übrigen Sammelbehälter) um die Drehachse gedreht werden, sodass der gesammelte Niederschlag entleert wird und ein anderer der mehreren Sammelbehälter an die Sammelposition zum Aufsammeln weiteren Niederschlags gedreht wird. Diese Drehung kann durch die Schwerkraft nach Freigabe durch Lösen der Arretierung oder mithilfe des genannten Motors bewirkt werden. Die Arretierung kann hierbei einen (Elektro-Magneten umfassen, der je nach Betrieb eine ein metallisches Material umfassende Kante eines Sammelbehälters durch magnetische Kraft halten (geschlossene Arretierung) oder beispielsweise abstoßen (geöffnete Arretierung) kann. Gemäß verschiedener Ausführungsformen kann die Drehung - beispielsweise durch eine entsprechende elektronische Steuerschaltung - veranlasst werden, wenn ein vorbestimmter Schwellwert eines Pegels des gesammelten Niederschlags im Sammelbehälter erreicht wird oder wenn eine bestimmte Schwelle eines von einer Wägeeinrichtung gemessenen Gewichts der Niederschlagsmessvorrichtung beziehungsweise des Sammelbehälters beziehungsweise des gesammelten Niederschlags erreicht wird.

In sämtlichen oben beschriebenen Beispielen kann die Niederschlagsmenge, die in der Niederschlagsmessvorrichtung beziehungsweise in den Sammelbehältern gesammelt wird, mithilfe einer Wägeeinrichtung, die zum Wiegen von zumindest einem der mehreren Sammelbehälter ausgebildet ist, bestimmt werden. Die Wägeeinrichtung kann die Sammelbehälter (oder denjenigen der Sammelbehälter der aktuell Niederschlag sammelt oder gesammelt hat) oder die gesamte Niederschlagsmessvorrichtung und somit den gesammelten Niederschlag wiegen und sie kann einen Biegebalken oder anderweitigen Waagebalken zum mechanischen Wiegen aufweisen. Um die Wägeeinrichtung gegen Niederschlagsflüssigkeit und gegenüber Verschmutzung zu schützen, kann sie mit einer entsprechenden Abdeckung versehen sein.

In sämtlichen oben beschriebenen Beispielen kann die Niederschlagsmessvorrichtung eine Radarsensoreinrichtung und/oder eine optische Sensoreinrichtung, insbesondere eine Infrarotsendeeinrichtung umfassen. Die optische Sensoreinrichtung kann eine Infrarot-Sendeeinrichtung zum Aussenden von Licht unterschiedlicher Wellenlängen (jeweils im Infrarotbereich) umfassen. Allgemein können die Wellenlängen den Absorptionsbanden von Wasser und Eis angepasst sein. Mithilfe der Radarsensoreinrichtung beziehungsweise der optischen Sensoreinrichtung, kann detektiert werden, ob Niederschlag vorliegt. Insbesondere kann mithilfe der genannten Radarsensoreinrichtung und/oder optischen Sensoreinrichtung die Art des Niederschlags (beispielsweise Regen, Hagel oder Schnee) bestimmt werden. Die Messergebnisse der Wägeeinrichtung können gemäß einer Weiterbildung zusammen mit Daten der Radarsensoreinrichtung und/oder optischen Sensoreinrichtung an eine elektronische Datenverarbeitungseinrichtung (beispielsweise einen Computer oder Mikroprozessor umfassend) der Niederschlagsmessvorrichtung geliefert werden und diese kann dann mit erhöhter Genauigkeit basierend auf den empfangenen Daten die Niederschlagsmenge bestimmen. Generell erhöht das Bereitstellen mehr als eines Messverfahrens Genauigkeit und Zuverlässigkeit der Bestimmung der Niederschlagsmenge.

Außerdem können die Radarsensoreinrichtung oder die optische Sensoreinrichtung beziehungweise die elektronische Datenverarbeitungseinrichtung dazu ausgebildet sein, eine Betauung des oben genannten Sammeltrichters, der Niederschlag in einen Sammelbehälter leitet, zu detektieren. Auch so kann die Messgenauigkeit insgesamt erhöht werden, da in einem Sammelbehälter gesammeltes Fluid, das lediglich aus einer Betauung des Sammeltrichters resultiert (und eben nicht aufgrund eines Niederschlags), bei der Bestimmung der Niederschlagsmenge unberücksichtigt bleiben kann.

Die genannte Arretierung, Wägeeeinrichtung, optische Sensoreinrichtung und optische Sensoreinrichtung können alle mit der oben genannten elektronischen Datenverarbeitungseinrichtung, die eine Steuereinrichtung umfassen kann, verbunden sein.

Zur Lösung der oben genannten Aufgabe wird weiterhin ein Verfahren gemäß Anspruch 12 bereitgestellt. Dieses Verfahren zum Bestimmen einer Niederschlagsmenge umfasst die Schritte:
Bereitstellen einer Niederschlagsmessvorrichtung gemäß einem der zuvor beschriebenen Beispiele;
Positionieren eines ersten der mehreren Sammelbehälter in eine Sammelposition;
Sammeln von Niederschlag in dem ersten der mehreren Sammelbehälter in der Sammelposition;
Drehen des ersten der mehreren Sammelbehälter von der Sammelposition in eine Entleerungsposition zum Entleeren des gesammelten Niederschlags, nachdem eine vorbestimmte Menge an Niederschlag von dem ersten der mehreren Sammelbehälter in der Sammelposition gesammelt worden ist; und
Drehen eines zweiten der mehreren Sammelbehälter, der von dem ersten Sammelbehälter verschieden ist, in die Sammelposition.

Der erste und der zweite der mehreren Sammelbehälter können hierbei um denselben Winkel um die gemeinsame Drehachse gedreht werden. Weiterhin kann das Verfahren ein Wiegen des ersten der mehreren Sammelbehälter oder der Niederschlagsmessvorrichtung vor dem Entleeren des gesammelten Niederschlags aus dem ersten der mehreren Sammelbehälter umfassen. Aufgrund des Wiegeergebnisses kann dann die Niederschlagsmenge bestimmt werden.

Gemäß einer Weiterbildung umfasst das Verfahren die Schritte:
Sammeln von Niederschlag in dem zweiten der mehreren Sammelbehälter in der Sammelposition;
Drehen des zweiten der mehreren Sammelbehälter von der Sammelposition in eine Entleerungsposition zum Entleeren des gesammelten Niederschlags, nachdem eine vorbestimmte Menge an Niederschlag von dem zweiten der mehreren Sammelbehälter in der Sammelposition gesammelt worden ist; und
Drehen eines dritten der mehreren Sammelbehälter, der von dem ersten und dem zweiten Sammelbehälter verschieden ist, in die Sammelposition.

Weitere Merkmale und beispielhafte Ausführungsformen der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Figuren

Weitere Ausführungsformen der vorliegenden Erfindung sind in den angefügten Patentansprüchen definiert und gehen deutlicher aus der folgenden detaillierten Beschreibung hervor. Es zeigen:
Figur 1 drei Sammelbehälter zum Sammeln von Niederschlag zur Verwendung in einer Niederschlagsmessvorrichtung gemäß einer Ausführungsform der vorliegenden Erfindung; und
Figuren 2a bis 2c eine Niederschlagsmessvorrichtung gemäß einer Ausführungsform der vorliegenden Erfindung in verschiedenen Betriebszuständen.

### Detaillierte Beschreibung

Obwohl die vorliegende Erfindung mit Bezug auf die Ausführungsformen beschrieben ist, wie sie in der folgenden detaillierten Beschreibung sowie in den Zeichnungen dargestellt sind, sollte beachtet werden, dass die folgende detaillierte Beschreibung sowie die Zeichnungen nicht beabsichtigen, die vorliegende Erfindung auf die speziellen anschaulichen Ausführungsformen einzuschränken, sondern die beschriebenen anschaulichen Ausführungsformen stellen lediglich beispielhaft die diversen Aspekte der vorliegenden Erfindung dar, deren Schutzbereich hingegen ausschließlich durch die angefügten Patentansprüche definiert ist.

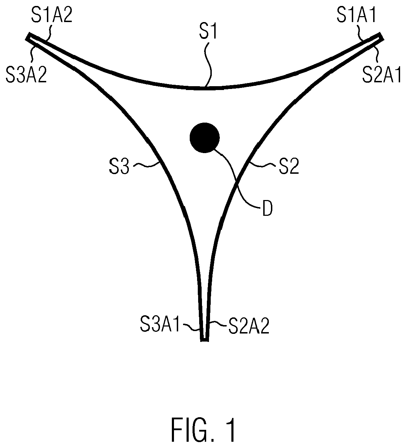

Es wird hier eine Niederschlagsmessvorrichtung mit mehreren Sammelbehältern bereitgestellt. In Figur 1 sind beispielhaft drei Sammelbehälter S1, S2 und S3 gezeigt. In der gezeigten Ausführungsform weisen die drei Sammelbehälter S1, S2 und S3 die gleiche geometrische Form auf. Die drei Sammelbehälter S1, S2 und S3 sind um eine gemeinsame Drehachse D drehbar angeordnet. Die Sammelbehälter S1, S2 und S3 können hierbei um 360° um die gemeinsame Drehachse D drehbar sein ("Wasserrad"-Konfiguration). In dem gezeigten Beispiel sind die Sammelbehälter S1, S2 und S3 durch konkave Oberflächen eines einzigen Bauteils ausgebildet. Außenwände jeweils eines Sammelbehälters grenzen an Außenwänden zwei anderer Sammelbehälter an, d.h. eine Außenwand S1A1 des Sammelbehälters S1 grenzt an einer Außenwand S2A1 des Sammelbehälters S2 an, eine Außenwand S1A2 des Sammelbehälters S1 grenzt an einer Außenwand S3A2 des Sammelbehälters S3 an und eine Außenwand S3A1 des Sammelbehälters S3 grenzt an einer Außenwand S2A2 des Sammelbehälters S2 an. In sämtlichen hierin beschriebenen Ausführungsformen können die Sammelbehälter die in Figur 1 gezeigte Form aufweisen und in der in Figur 1 gezeigten Weise angeordnet sein. Selbstverständlich können mehr als drei Sammelbehälter vorgesehen sein. In der in Figur 1 gezeigten Ausbildung können die Sammelbehälter S1, S2 und S3 aus einem integralen Bauteil ausgebildet sein.

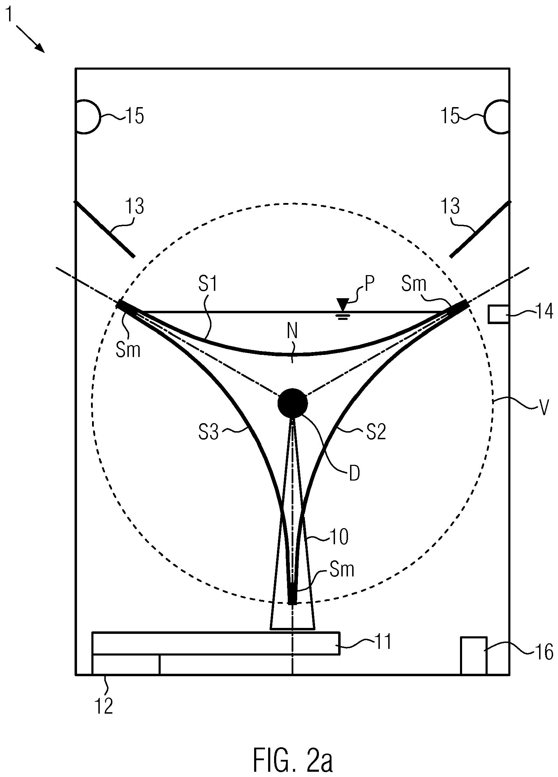

Figuren 2a bis 2c zeigen eine Niederschlagsmessvorrichtung 1 gemäß einer Ausführungsform der vorliegenden Erfindung in verschiedenen Betriebszuständen. In der gezeigten Ausführungsform weist die Niederschlagsmessvorrichtung 1 die in Figur 1 gezeigten Sammelbehälter S1, S2 und S3 auf, die um die gemeinsame Drehachse D drehbar angeordnet sind. Im Betrieb können die Sammelbehälter S1, S2 und S3 vollständig entlang eines Vollkreises V gedreht werden. Die Sammelbehälter S1, S2 und S3 sind an der gemeinsamen Drehachse gelagert, die auf einer Stütze 10 ruht. Die Stütze steht auf einer Wägeeinrichtung, die auf einem Träger 12 ruht. Die Wägeeinrichtung oder ein Teil von ihr wird mit dem Bezugszeichen 11 in den Figuren 2a bis 2c bezeichnet. Die Wägeeinrichtung 11 kann einen Biegebalken und eine Abdeckung zum Schutz vor Schmutz und Niederschlag aufweisen. Prinzipiell kann jede im Stand der Technik bekannte Wägeeinrichtung 11 Verwendung finden. Mithilfe der Wägeeinrichtung 11 kann das Gewicht des gesammelten Niederschlags gemessen und somit die gesammelte Niederschlagsmenge ermittelt werden.

Wie es in Figur 2a gezeigt ist, befindet sich der Sammelbehälter S1 in einer Sammelposition in der er Niederschlag N bis zu einem Pegel P gesammelt hat. Bei dem Niederschlag kann es sich um Regenwasser, Schnee, Hagel oder ein Gemisch davon handeln. Der Niederschlag wird über einen Auffangtrichter 13 in den Sammelbehälter S1 geleitet. Der Pegel kann durch einen (nicht gezeigten) Pegelsensor überprüft werden, und wenn ein vorbestimmter Pegel erreicht wird, können der Sammelbehälter S1 und somit auch die Sammelbehälter S2 und S3 um die im Wesentlichen horizontal ausgerichtete Drehachse D gedreht werden, sodass der Sammelbehälter S1 entleert werden kann. Der entleerte Niederschlag kann dann über eine entsprechende (nicht gezeigte) Ableitung, beispielsweise im Wesentlichen horizontal, abgeleitet werden. Es wird also durch Erreichen eines vorbestimmten Schwellwerts des Pegels P die Drehung veranlasst. Alternativ kann eine Drehung veranlasst werden, wenn die Wägeeinheit 11 je nach konkreter Ausführungsform ein vorbestimmtes Gewicht des gesammelten Niederschlags beziehungsweise des Sammelbehälters S1 (mit dem Niederschlag) beziehungsweise der Niederschlagsmessvorrichtung 1 mit dem Sammelbehälter S1 mit dem Niederschlag misst.

Die Drehung der Sammelbehälter S1, S2 und S3 der Niederschlagsmessvorrichtung 1 um die gemeinsame Drehachse D kann bewirkt durch die Schwerkraft erfolgen. Das von den Sammelbehälter S1, S2 und S3 gebildete "Wasserrad" kann durch eine oder mehrere Arretierungen 14 während des Vorgangs des Sammelns, beispielsweise in dem Sammelbehälter S1, festgestellt sein und nach Erreichen eines vorbestimmten Pegels P oder Gewichts des gesammelten Niederschlags kann die Arretierung 14 gelöst werden, und es kann die Drehung somit ermöglicht werden. Die Arretierung 14 kann mechanischer oder (elektro)magnetischer Natur sein. So kann die Arretierung 14 beispielsweise einen Elektromagneten umfassen, der mit metallischen Spitzen Sm der Sammelbehälter S1, S2 und S3 zusammenwirken kann. In einem geschlossenen Arretierzustand kann der Elektromagnet die metallischen Spitzen Sm halten und einem geöffneten Arretierzustand der Elektromagnet die metallischen Spitzen Sm abstoßen. Die Drehung der Sammelbehälter S1, S2 und S3 um die gemeinsame Drehachse D kann alternativ (oder zusätzlich) von einem Motor bewirkt werden.

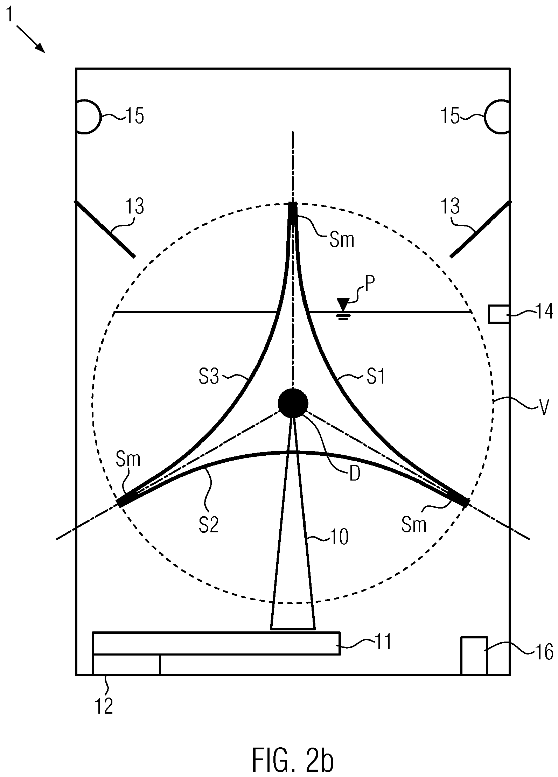

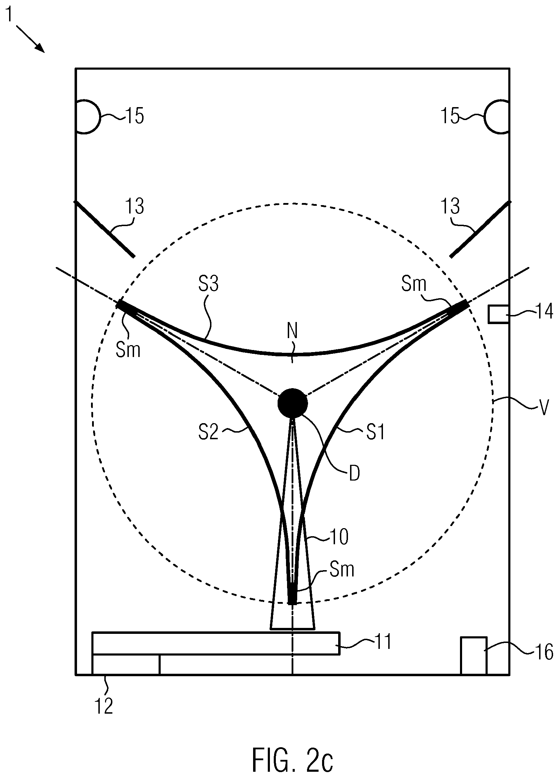

Figur 2b zeigt die in Figur 1 gezeigte Niederschlagsmessvorrichtung 1 nach einer Drehung der Sammelbehälter S1, S2 und S3 zur Entleerung des Sammelbehälters S1 um die gemeinsame Drehachse D um etwa 60° im Uhrzeigersinn. In dem in der Figur 2c gezeigten Betriebszustand ist eine Drehung im Uhrzeigersinn um 120° erfolgt, sodass nun der Sammelbehälter S3 unterhalb des Auffangtrichters 13 in Sammelposition zur Aufnahme von Niederschlag bereitgestellt ist. Der zuvor zum Sammeln des Niederschlags verwendete verwendete Sammelbehälter S1 ist vollständig oder beinahe vollständig entleert. Nachdem der Sammelbehälter S3 Niederschlag bis zu einer bestimmten Schwelle eines Pegels oder eines Gewichts aufgesammelt hat, kann wieder eine Drehung ausgeführt werden, sodass zum einen der in dem Sammelbehälter S3 gesammelte Niederschlag entleert werden kann und zum anderen der Sammelbehälter S2 in Sammelposition unterhalb des Auffangtrichters 13 bereitgestellt werden kann. Nun ist der Sammelbehälter S3 vollständig oder beinahe vollständig entleert, und der Sammelbehälter S1 ist in der in Figur 2c gezeigten Position vollständig entleert.

Optional kann die Niederschlagsmessvorrichtung 1 weitere Sensoren 15 zum Detektieren von Niederschlag aufweisen. Die Sensoren 15 können optische Sensoren oder Radarsensoren umfassen, die elektromagnetische Strahlen unterschiedlicher Wellenlängen emittieren und detektieren können. Eine der Wellenlängen des von den optischen Sensoren in Form eines Infrarotemitters erzeugten Licht, kann insbesondere für die Bestimmung von Eis oder Eisschichten geeignet sein, beispielsweise eine Wellenlänge von 1500 nm. Die Sensoren können allgemein dazu verwendet werden, festzustellen ob Niederschlag unterschiedlicher Art (Rege, Schnee, Hagel, etc.) vorliegt. Wenn kein Niederschlag vorliegt, kann die Niederschlagsmessvorrichtung 1 entsprechend abgeglichen werden.

Insbesondere kann eine Radarsensoreinrichtung vorgesehen sein, die eine Betauung des Auffangtrichters 13 misst. Eine Betauung kann das Messergebnis für den Niederschlag dahingehend verfälschen, dass in Form kondensierter Flüssigkeit auftretender Tau (der nicht als Niederschlag anzusehen ist), von den Wänden des Auffangtrichters 13 in einen der in Sammelposition bereitgestellten Sammelbehälter S1, S2, S3 gelangt. Eine Bestimmung des Taus durch die Radarsensoreinrichtung ermöglicht somit eine erhöhte Gesamtmessgenauigkeit für den zu ermittelnden Niederschlag.

Sämtliche von den Sensoren 15 sowie der Wägeeinrichtung 11 erhobene Daten können einer elektronischen Datenverarbeitungseinrichtung 16 zugeführt werden. Diese elektronische Datenverarbeitungseinrichtung 16 kann eine programmierbare Auswerteeinheit mit einem Mikroprozessor und Speicher aufweisen. In dem Speicher können Messdaten gespeichert werden und er kann Messalgorithmen bereitstellen. Der Prozessor kann über einen Adress- und Datenbus mit dem Speicher (Programm- und Datenspeicher) sowie mit verschiedenen Schnittstellen(schaltungen) verbunden sein. Die elektronische Datenverarbeitungseinrichtung 16 kann eine prozessorgesteuerte Mess- und Steuerelektronik umfassen. Insbesondere kann die Steuerelektronik mit der Arretiereinrichtung 14 und einem gegebenenfalls zur Drehung der Sammelbehälter S1, S2, S3 vorgesehenen Motor verbunden sein. Basierend auf einer Istzeiterfassung der Messwerte, die die Wägeeinrichtung 11 und/oder ein Pegelsensor zum Messen des Pegels eines in einem der Sammelbehälter S1, S2, S3 gesammelten Niederschlags liefern und die kontinuierlich oder periodisch in einen Datenspeicher gespeichert werden können, kann die Steuerelektronik durch entsprechende Steuerung des Motors und/oder der Arretiereinrichtung 14 eine Drehung der Sammelbehälter S1, S2, S3, beispielsweise in die in den Figuren 2a bis 2c gezeigten Betriebszustände/-positionen veranlassen.

## Patentansprüche

1. Niederschlagsmessvorrichtung umfassend:
mehrere, insbesondere mehr als zwei, Sammelbehälter, die um eine gemeinsame Drehachse und drehbar um dieselbe angeordnet sind.

2. Niederschlagsmessvorrichtung gemäß Anspruch 1, in der die mehreren Sammelbehälter um 360° um die Drehachse drehbar sind.

3. Niederschlagsmessvorrichtung gemäß Anspruch 1 oder 2, in der jeder der mehreren Sammelbehälter an zumindest einer seiner Außenwände an eine Außenwand eines anderen der mehren Sammelbehälter angrenzt.

4. Niederschlagsmessvorrichtung gemäß einem der vorhergehenden Ansprüche, weiterhin mit einer Einrichtung, die dazu ausgebildet ist, die Sammelbehälter um die gemeinsame Drehachse zu drehen, wobei die Einrichtung einen Motor und/oder eine lösbare Arretierung zum Arretieren und Freigeben mindestens eines der mehreren Sammelbehälter umfasst.

5. Niederschlagsmessvorrichtung gemäß Anspruch 4, in der die lösbare Arretierung einen Elektromagneten umfasst.

6. Niederschlagsmessvorrichtung gemäß einem der vorhergehenden Ansprüche, weiterhin mit einer Wägeeinrichtung, die zum Wiegen von zumindest einem der mehreren Sammelbehälter ausgebildet ist.

7. Niederschlagsmessvorrichtung gemäß einem der vorhergehenden Ansprüche, weiterhin mit einer Radarsensoreinrichtung, die zum Detektieren von Niederschlag ausgebildet ist.

8. Niederschlagsmessvorrichtung gemäß einem der vorhergehenden Ansprüche, weiterhin mit einer optischen Sensoreinrichtung, insbesondere einer Infrarotsendeeinrichtung, die zum Detektieren von Niederschlag ausgebildet ist.

9. Niederschlagsmessvorrichtung gemäß Anspruch 7 oder 8, in der die Radarsensoreinrichtung oder die optische Sensoreinrichtung dazu ausgebildet ist, die Art eines in einem der Sammelbehälter gesammelten Fluids zu bestimmen.

10. Niederschlagsmessvorrichtung gemäß Anspruch 7, 8 oder 9, weiterhin mit einem Sammeltrichter der dazu ausgebildet ist, Niederschlag in einen der mehreren Sammelbehälter zu leiten, und wobei die Radarsensoreinrichtung oder die optische Sensoreinrichtung beziehungsweise eine damit verbundene elektronische Datenverarbeitungseinrichtung dazu ausgebildet ist, eine Betauung des Sammeltrichters zu detektieren.

11. Niederschlagsmessvorrichtung gemäß einem der Ansprüche 7 bis 10, weiterhin mit einer elektronischen Verabreitungseinrichtung, die dazu ausgebildet ist, die Messung einer Niederschlagsmenge auf der Grundlage der Sammelbehälter mithilfe der Radarsensoreinrichtung oder der optischen Sensoreinrichtung zu kalibrieren.

12. Verfahren zum Bestimmen einer Niederschlagsmenge, umfassend:
Bereitstellen einer Niederschlagsmessvorrichtung gemäß einem der vorhergehenden Ansprüche;
Positionieren eines ersten der mehreren Sammelbehälter in eine Sammelposition;
Sammeln von Niederschlag in dem ersten der mehreren Sammelbehälter in der Sammelposition;
Drehen des ersten der mehreren Sammelbehälter von der Sammelposition in eine Entleerungsposition zum Entleeren des gesammelten Niederschlags, nachdem eine vorbestimmte Menge an Niederschlag von dem ersten der mehreren Sammelbehälter in der Sammelposition gesammelt worden ist; und
Drehen eines zweiten der mehreren Sammelbehälter, der von dem ersten Sammelbehälter verschieden ist, in die Sammelposition.

13. Verfahren gemäß Anspruch 12, in dem der erste und der zweite der mehreren Sammelbehälter um denselben Winkel um die gemeinsame Drehachse gedreht werden.

14. Verfahren gemäß Anspruch 12 oder 13, weiterhin mit Wiegen des ersten der mehreren Sammelbehälter oder der Niederschlagsmessvorrichtung vor dem Entleeren des gesammelten Niederschlags aus dem ersten der mehreren Sammelbehälter.

15. Verfahren gemäß Anspruch 12, 13 oder 14, weiterhin mit den Schritten:
Sammeln von Niederschlag in dem zweiten der mehreren Sammelbehälter in der Sammelposition;
Drehen des zweiten der mehreren Sammelbehälter von der Sammelposition in eine Entleerungsposition zum Entleeren des gesammelten Niederschlags, nachdem eine vorbestimmte Menge an Niederschlag von dem zweiten der mehreren Sammelbehälter in der Sammelposition gesammelt worden ist; und
Drehen eines dritten der mehreren Sammelbehälter, der von dem ersten und dem zweiten Sammelbehälter verschieden ist, in die Sammelposition.
